# EUROPÄISCHE PATENTSCHRIFT

(11) **EP 3 208 402 B1**
(45) Veröffentlichungstag und Bekanntmachung des Hinweises auf die Patenterteilung: **29.04.2020**
(21) Anmeldenummer: 16202354.3
(22) Anmeldetag: 06.12.2016
(51) Int. Cl.: E04C 2/288, E04C 2/54, E04F 13/08, E04F 13/14, E04D 3/35

(54) **ANORDNUNG MIT EINEM DACH- ODER FASSADENELEMENT IN GESTALT EINES SANDWICHARTIG AUFGEBAUTEN DÄMMPANEELS UND MIT EINEM FENSTERELEMENT**
SYSTEM WITH A ROOF OR FAÇADE ELEMENT IN THE FORM OF A SANDWICH INSULATION PANEL AND WITH A WINDOW ELEMENT
SYSTÈME AVEC UN ÉLÉMENT DE FAÇADE OU DE TOIT SOUS FORME D'UN PANNEAU ISOLANT CONÇU EN FORME DE SANDWICH ET AVEC UN ÉLÉMENT DE FENÊTRE

(30) Priorität: 17.02.2016 DE 102016102780
(43) Veröffentlichungstag der Anmeldung: 23.08.2017
(73) Patentinhaber: sedak holding GmbH, 86368 Gersthofen (DE)
(72) Erfinder: SEELE, Gerhard, 86356 Neusäß (DE)
(74) Vertreter: Trinks, Ole

(56) Entgegenhaltungen:
- EP-A1- 2 061 091
- EP-A1- 2 528 107
- DE-A1- 19 826 921
- DE-A1-102012 215 608
- DE-A1-102013 223 580
- DE-B- 1 177 793

## Beschreibung

Die Erfindung betrifft eine Anordnung mit einem Dach- oder Fassadenelement in Gestalt eines sandwichartig aufgebauten Dämmpaneels mit einer optimierten Außenfläche und mit einem benachbart zu diesem Dach-oder Fassadenelement angeordneten Fensterelement.

Dämmpaneele der gattungsgemäßen Art sind insbesondere solche, die für den Einsatz im Baubereich, insbesondere zur Dacheindeckung und Fassadenbekleidung verwendet werden. Derartige aus dem Stand der Technik allgemein bekannten Dämmpaneele bestehen üblicherweise aus zwei Außenplatten aus Blech oder PVC, zwischen denen sich sandwichartig eine Dämmschicht beispielsweise aus Polyurethanschaum befindet.

Ein solches Dämmpaneel ist beispielsweise in der WO 2004/009929 A1 beschrieben. Das aus diesem Stand der Technik bekannte Paneel besteht aus einem Paar Bleche, die sandwichartig mit dazwischen liegender Dämmschicht miteinander verbunden sind.

Bei den in der Bautechnik zum Einsatz kommenden Dämmpaneelen dienen die beiden Deckplatten in der Regel dazu, dem sandwichartig aufgebauten Dämmpaneel eine möglichst hohe mechanische Festigkeit zu geben und das gesamte Sandwichelement wetterfest und gegenüber mechanischen Einwirkungen möglichst unempfindlich auszugestalten. Meist werden die beiden Deckschichten mit Hilfe eines Klebstoffes auf die Dämmschicht aufgeklebt.

Die herkömmlichen aus der Bautechnik bekannten Dämmpaneele haben den Nachteil, dass diese sich zwar relativ günstig herstellen lassen, allerdings ist deren Einsatzgebiet in der Regel auf gewerblich genutzte Hallen, insbesondere Lagerhallen oder Fabrikhallen, beschränkt. Ursache hierfür ist zum einen, dass Dämmpaneele aus dem Baubereich der bekannten Art - wenn überhaupt - nur schwer in die Architektur beispielsweise eines Wohn- oder Bürohauses eingliedern lassen. Als weiterer Nachteil ist in diesem Zusammenhang zu nennen, dass die herkömmlichen aus dem Baubereich bekannten Dämmpaneele keine Belichtungsmöglichkeiten nach innen oder Sichtbezug nach außen bieten, was allerdings insbesondere im Bereich des Objektbaus zunehmend gefordert wird.

Eine Anordnung gemäß dem Oberbegriff des Anspruchs 1 ist aus der DE 10 2013 223 580 A1 bekannt.

Auf Grundlage dieser Problemstellung liegt der Erfindung die Aufgabe zugrunde, eine Anordnung mit einem Fensterelement und einem Dach-oder Fassadenelement in Gestalt eines sandwichartig aufgebauten Dämmpaneels anzugeben, welches sich verhältnismäßig günstig herstellen lässt, wobei gleichzeitig eine Schall- und Wärmedämmung erzielbar sein soll, die vergleichbar mit den Werten bei einem entsprechenden Industrie-Paneel ist. Insbesondere soll sich die Anordnung für den Objektbau eignen und soll bedarfsweise die beim Objektbau gewünschte Lichtdurchlässigkeit ermöglichen.

Diese Aufgabe wird erfindungsgemäß durch den Gegenstand des unabhängigen Patentanspruchs 1 gelöst. Vorteilhafte Weiterbildungen der erfindungsgemäßen Anordnung sind in den abhängigen Patentansprüchen angegeben.

Demnach wird ein Dach- oder Fassadenelement in Gestalt eines sandwichartig aufgebauten Dämmpaneels angegeben, wobei dieses Dämmpaneel eine Dämmschicht mit einer nach außen zeigenden ersten Deckfläche, einer nach innen zeigenden zweiten Deckfläche sowie mit einer die beiden Deckflächen verbindenden umlaufenden Fläche aufweist. Des Weiteren ist eine einstückig, insbesondere monolithisch Außen-Deckplatte insbesondere aus Glas oder einem glasartigen Material vorgesehen. Die Außen-Deckplatte ist derart dimensioniert und auf der ersten Deckfläche der Dämmschicht angeordnet, dass die erste Deckfläche der Dämmschicht von der Außen-Deckplatte vollständig überdeckt wird. Weiterhin ist vorgesehen, dass das Dämmpaneel einen zumindest bereichsweise seinem umlaufenden Randbereich ausgebildeten und von außen nicht einsehbaren Bereich aufweist, der dazu dient, um Konstruktionselemente verdeckt aufnehmen.

Gemäß bevorzugten Ausführungsformen der erfindungsgemäßen Lösung besteht die Außen-Deckplatte aus Glas, einem glasartigen Material oder einem anorganischen Material. Insbesondere kann die Außen-Deckplatte aus allen für das Bauwesen geeigneten Materialien bestehen, wie beispielsweise Leichtbeton, Stein oder Naturstein. Auch ist es denkbar, hierfür eine Metall-Sandwich-Platte zu verwenden.

Das sandwichartig aufgebaute Dämmpaneel mag zumindest auf den ersten Blick in struktureller Hinsicht gewisse Ähnlichkeiten mit aus dem Stand der Technik Industrie-Paneele aufweisen, welche als Fassadenplatten für gewerblich genutzte Hallen etc. zum Einsatz kommen. Denn wie auch herkömmliche Industrie-Paneele weist das erfindungsgemäße Dämmpaneel eine Dämmschicht insbesondere aus mineralischem oder erölbasiertem Dämmstoff auf. Gemäß Weiterbildungen des erfindungsgemäßen Dämmpaneels kommen ferner erste und zweite Deckplatten zum Einsatz, die sandwichartig die Dämmschicht schließen, wobei die Deckplatte aus einem relativ zu dem Material der Dämmschicht harten Material gebildet sind.

Hierbei ist es beispielsweise denkbar, wenn die Deckplatten aus Metall oder einem Metall-Sandwich gebildet sind. Selbstverständlich kommen aber auch andere Materialien für die Deckplatten in Frage, wie etwa Gips-Karton-Platten, zementgebundene Platten, Naturstein oder Ornamentplatten. Auch ist es denkbar, dass die erste Deckschicht aus einem Material gefertigt ist, welches verschiedene von dem Material der zweiten Deckschicht ist.

Erfindungswesentlich ist jedoch nicht das Vorsehen derartiger Deckplatten. Es kommt lediglich darauf an, dass die Dämmschicht des sandwichartig aufgebauten Dämmpaneels eine nach außen zeigende erste Deckfläche sowie eine nach innen zeigende zweite Deckfläche aufweist.

Darüber hinaus ist die einstückig, insbesondere monolithisch ausgebildete Außen-Deckplatte aus Glas oder einem glasartigen Material erfindungswesentlich. Die Außen-Deckplatte ist dabei vollflächig auf der nach außen zeigenden ersten Deckfläche der Dämmschicht angeordnet und mit der entsprechenden Deckschicht verbunden.

Beispielsweise kann die Verbindung zwischen der Außen-Deckplatte und der nach außen zeigenden ersten Deckfläche der Dämmschicht über eine Vielzahl von Halteplatten oder Haltepunkten erfolgen. Die Halteplatten/Haltepunkte können beispielsweise aus einem Leichtmetall, insbesondere Aluminium, gebildet und weisen vorzugsweise eine Dicke von mindestens 4 mm, vorzugsweise mindestens 6 mm auf, sowie eine Grundfläche von maximal 50 x 50 mm² und vorzugsweise maximal 30 x 30 mm².

In diesem Zusammenhang ist es denkbar, wenn die Halteplatten, über welche die Außen-Deckplatte mit der nach außen zeigenden ersten Deckfläche der Dämmschicht verbunden ist, stoffschlüssig mit einer nach innen zeigenden Fläche der Außen-Deckplatte verbunden ist. Die stoffschlüssige Verbindung lässt sich beispielsweise mit Hilfe eines Klebers, insbesondere eines Klebers auf SilikonKautschuk-Basis realisieren. Denkbar in diesem Zusammenhang wäre es auch, wenn die stoffschlüssige Verbindung mit Hilfe eines doppelseitigen Klebebandes realisiert wird.

Andererseits ist es von Vorteil, wenn die Halteplatten, über welche die Außen-Deckplatte mit der nach außen zeigenden ersten Deckfläche der Dämmschicht verbunden ist, über eine Schraub- oder Nietverbindung mit der entsprechenden Deckfläche verbunden ist. Demnach ist es insbesondere denkbar, dass zur Fertigung des erfindungsgemäßen Dach- oder Fassadenelements zunächst die Halteplatten mit der entsprechenden Deckfläche der Dämmschicht verbunden werden, wobei anschließend ein Kleber auf die Halteplatten aufgebracht wird, um die stoffschlüssige Verbindung der Außen-Deckplatte mit den bereits mit der entsprechenden Deckfläche der Dämmschicht verbundenen Halteplatten zu realisieren.

In besonders bevorzugten Realisierungen der erfindungsgemäßen Lösung ist jedoch vorgesehen, dass die Außen-Deckplatte nicht über Halteplatten, sondern über eine insbesondere linienförmige Verklebung mit der ersten Deckplatte bzw. der Deckfläche der Dämmschicht verbunden wird. Bei dieser Verklebung handelt es sich insbesondere um eine Verklebung auf Silikon-Basis.

Auf diese Weise lässt sich die Außen-Deckplatte in einer besonders einfach zu realisierenden aber dennoch effektiven Weise vollflächig auf der nach außen zeigenden ersten Deckfläche der Dämmschicht anordnen und dort fixieren. Durch das Vorsehen von entsprechenden Halteplatten, die im fertig montierten Zustand des Dach- oder Fassadenelements zwischen der Außen-Deckplatte und der entsprechenden Deckfläche der Dämmschicht angeordnet sind, liegt (bewusst) ein Luftspalt zwischen der Außen-Deckplatte und der entsprechenden Deckfläche der Dämmschicht vor, was eine Hinterlüftung des Dach- oder Fassadenelements ermöglicht, um so eine unerwünschte Kondensation insbesondere auf der Innenfläche der Außen-Deckplatte zu verhindern.

In diesem Zusammenhang ist es denkbar, wenn eine Abdeckung vorgesehen ist, um zumindest die obere Längskante des Dach- bzw. Fassadenelements abzudecken und das (ungewollte) Eindringen von Feuchtigkeit und/oder Schmutz in den Luftspalt zwischen der Außen-Deckplatte und der ersten Deckfläche der Dämmschnitt zu verhindern. Hierfür eignet sich beispielsweise ein Attikablech, um die Abdeckung zumindest der oberen Kante des Dach-/Fassadenelements zu realisieren. Selbstverständlich kommen hierzu aber auch andere Lösungen in Frage.

Wie bereits ausgeführt, ist bei der erfindungsgemäßen Anordnung ein zumindest bereichsweise in dem umlaufenden Randbereich des Dämmpaneels ausgebildeter und von außen nicht einsehbarer Bereich vorgesehen, welcher zum verdeckten Aufnehmen von Konstruktionselementen dient. Vorzugsweise ist dieser von außen nicht einsehbare Bereich in mindestens zwei einander gegenüberliegenden Seiten des Dämmpaneels ausgebildet, und noch bevorzugter ist dieser von außen nicht einsehbare Bereich als ein das Dämmpaneel umlaufender Bereich ausgebildet.

Erfindungsgemäß ist der von außen nicht einsehbare Bereich derart dimensioniert und ausgebildet, dass in den nicht einsehbaren Bereich eine Rahmenkonstruktion eines benachbart zum Dach- bzw. Fassadenelement angeordneten Fensterelements verdeckt aufgenommen ist. Darüber hinaus kann der von außen nicht einsehbare Bereich derart dimensioniert und ausgebildet, dass in den nicht einsehbaren Bereich ein Tragprofil verdeckt aufnehmbar ist. Dieses Tragprofil

kann gegebenenfalls erforderlich sein, um die notwendige Tragfähigkeit des Dach-/Fassadenelements zu gewährleisten.

Gemäß einem Aspekt der vorliegenden Erfindung ist vorgesehen, dass der nach außen nicht einsehbarer Bereich eine von dem Randbereich des Dämmpaneel einspringende Tiefe aufweist, welche gleich wie oder größer als die Stärke bzw. Dicke der Dämmschicht ist. Auf diese Weise können zwei benachbarte Dach-/Fassadenelemente unter Winkel angeordnet werden, wobei der sich dann ausbildende Eckbereich nach außen nur von der Außen-Deckplatte gebildet ist.

Gemäß einem weiteren Aspekt der vorliegenden Erfindung weist das Fensterelement eine Rahmenkonstruktion und eine relativ zu der Rahmenkonstruktion bewegbare Flügelkonstruktion auf, wobei die Rahmenkonstruktion in dem von außen nicht einsehbarem Bereich des Dach-oder Fassadenelements aufgenommen ist. Besonders bevorzugt ist vorgesehen, wenn die relativ zu der Rahmenkonstruktion bewegbare Flügelkonstruktion insbesondere einen Fensterflügel aufweist, der zum Öffnen relativ zu der Rahmenkonstruktion mechanisch linear verschoben gedreht und/oder geschwenkt wird.

Nachfolgend werden bevorzugte Ausführungsformen des erfindungsgemäßen Dach-/Fassadenelements anhand der beiliegenden Zeichnungen näher beschrieben.

Es zeigen:
- FIG. 1: eine schematische (isometrische) Ansicht auf ein Wandsystem mit Fassadenelementen gemäß exemplarischen Ausführungsformen der vorliegenden Erfindung;
- FIG. 2: eine Draufsicht auf ein Wandsystem mit Fassadenelementen gemäß exemplarischen Ausführungsformen der vorliegenden Erfindung; und
- FIG. 3: eine Schnittansicht entlang der Linie A-A in FIG. 2.

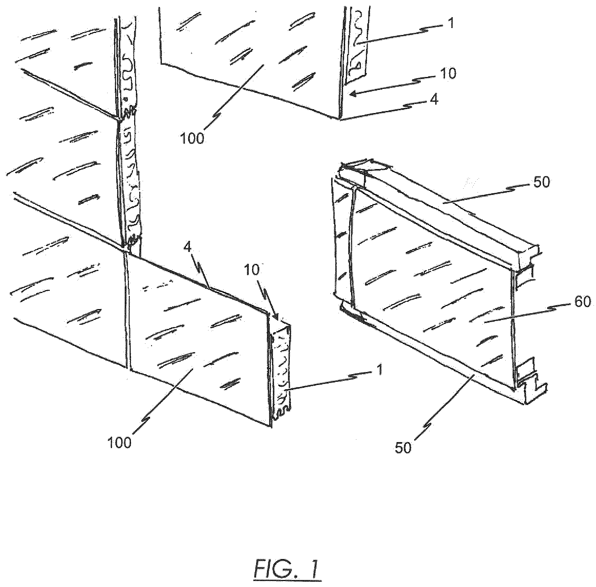

Die Erfindung betrifft ein Fassadenelement 100 bzw. Konstruktionselement zum Ausbilden einer Fassade oder eines Dachs. Wie in FIG. 1 schematisch angedeutet, kann die Fassade beispielsweise gebildet werden durch das Anordnen von mehreren nebeneinander liegender Konstruktionselementen/Fassadenelementen 100, die in Gestalt von sandwichartig aufgebauten Dämmpaneelen mit dazwischen liegenden Tragprofilen ausgeführt sind.

Dämmpaneele für den Einsatz im Baubereich, insbesondere zur Dacheindeckung und Fassadenbekleidung, sind zumindest dem Prinzip nach allgemein aus dem Stand der Technik bekannt. Sie bestehen üblicherweise aus zwei Außenplatten aus Stahlblech oder Aluminium, zwischen denen sich sandwichartig eine Dämmschicht, beispielsweise aus Polyurethanschaum oder Mineralwolle befindet. Bei den in der Bautechnik zum Einsatz kommenden Dämmpaneelen dienen die beiden Deckplatten in der Regel dazu, dem sandwichartig aufgebauten Dämmpaneel eine möglichst hohe mechanische Festigkeit zu geben und das gesamte Sandwichelement wetterfest und gegenüber mechanischen Einwirkungen möglichst unempfindlich auszugestalten.

Sandwichelemente im Sinne der vorliegenden Offenbarung sind Plattentragwerke, deren Außenschalen über einen Kern schubsteif miteinander verbunden sind. Die Zug- und Druckkräfte werden relativ gleichmäßig in den Platten verteilt.

Zur Erreichung einer möglichst großen Schubsteifigkeit sind bei Ausführungsformen der vorliegenden Erfindung die beiden Deckschichten mit Hilfe eines Klebstoffes mit der Dämmschicht verklebt.

Der Einbau dieser Elemente kann entweder vertikal oder horizontal erfolgen. Die Elemente haben üblicherweise eine Breite von etwa 1 bis 1,2 m. Die Länge dieser Elemente kann bis zu 15 m betragen.

Um eine möglichst wirtschaftliche Befestigung der Elemente an der Unterkonstruktion zu erreichen, wird versucht die Teile mit einer möglichst großen Spannweite einzubauen. Die mögliche Spannweite wird in erster Linie von den zwei Faktoren "Tragfähigkeit des Paneels" und "äußere Einwirkungen" beeinflusst. Die Tragfähigkeit des Paneels wird durch die Art des Kerns (Dämmschicht), durch die Dicke des Paneels und die Dicke der Außenplatten beeinflusst. Bei den äußeren Einwirkungen handelt es sich in erster Linie um Windlasten die auf das Paneel wirken. Die Höhe der Windlasten hängt stark vom Einbauort haben und sind in Normen oder Richtlinien geregelt.

Während die Tragfähigkeit des Paneels in einem bestimmten Bereich verändert werden kann sind die einwirkenden Windkräfte unveränderliche Anforderungen. Durch die große Verbreitung der Paneele in den letzten Jahren haben sich bei den Paneelherstellern bestimmte Standardabmessungen ergeben die nur noch schwierig zu verändern sind. Durch diesen Umstand ergeben sich für den Planer gewisse Einschränkungen. So liegen übliche Spannweiten der Elemente je nach äußerer Einwirkung bei etwa 4 bis 5 m. Sind höhere Spannweiten nötig, ist dies nur durch eine zusätzliche Unterkonstruktion möglich.

Erfindungsgemäß ist gemäß einem Aspekt der Erfindung vorgesehen, dass zwischen zwei benachbarten Sandwichelementen ein zusätzliches Tragprofil eingebracht wird. Das Tragprofil ist derart geformt, dass es genau in die Profilkonturen, d.h. den von außen nicht einsehbaren Bereich 10, der Standardelemente passt.

Je nach notwendiger Tragfähigkeit kann das Tragprofil schmäler oder breiter ausgeführt sein. Das Tragprofil kann aber auch außenseitig oder innenseitig eine Verlängerung aufweisen. Wie auch immer das Tragprofil geformt ist, die Standardpaneele können ohne Änderungen mit diesem Profil kombiniert werden.

Um auch den Wärmeschutz nicht ungünstig zu beeinflussen, kann das Tragprofil aus einem thermisch-getrennten Metall-Kunststoff-Verbundprofil bestehen. Das Tragprofil kann aber auch aus einem monolithischen Material mit geringer Wärmeleitfähigkeit, wie z.B. einem glasfaserverstärkten Kunststoff bestehen.

Das Tragprofil kann aber noch weiter Funktionen erfüllen. So kann das Profil außenseitig oder innenseitig dazu genutzt werden daran zusätzliche Bauteile zu befestigen, wie z.B. Firmenloggos, Beleuchtungen, oder sonstige Produkte. Weiterhin kann das Profil auch mit Beleuchtungsmitteln verstehen werden die innenseitig oder außenseitig direkte oder indirekte Beleuchtungen ermöglichen.

Der wesentlichste Vorteil ist jedoch, dass mit dem Tragprofil das Sandwichpaneel über größere Spannweiten gespannt werden kann. Weiterhin können damit auch Sandwichelemente eingebaut werden die beispielsweise Öffnungen oder Durchbrüche besitzen, und dadurch statisch geschwächt sind.

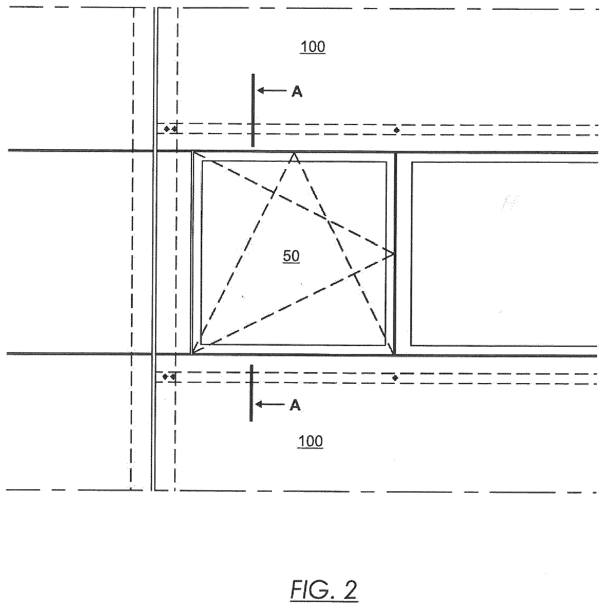

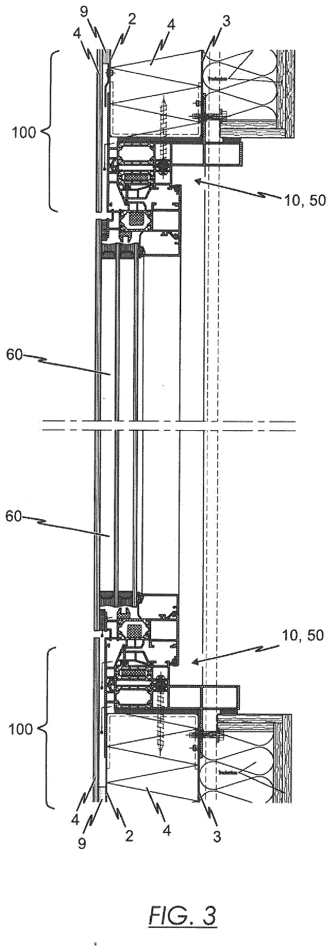

FIG. 2 zeigt eine Draufsicht auf ein Wandsystem mit Fassadenelementen 100 gemäß exemplarischen Ausführungsformen der vorliegenden Erfindung. FIG. 3 zeigt eine Schnittansicht entlang der Linie A-A in FIG. 2.

Das Wandsystem weist ein erstes Fassadenelement 100 gemäß einer exemplarischen Ausführungsformen der Erfindung mit einem benachbart zu dem Fassadenelement 100 angeordneten Fensterelement auf. Wie in FIG. 3 angedeutet, weist das Fensterelement 200 eine Rahmenkonstruktion 50 und eine relativ zu der Rahmenkonstruktion 50 bewegbare (verschiebbare, verschwenkbare und/oder verdrehbare) Flügelkonstruktion 60 aufweist. Die Rahmenkonstruktion 50 ist dabei in einem von außen nicht einsehbaren Bereich 10 des Fassadenelements 100 aufgenommen.

Parallel zu dem ersten Fassadenelement 100 und dem benachbart zu dem Fassadenelement 100 angeordneten Fensterelement ist ein zweites Fassadenelement 300 vorgesehen, welches eine Länge aufweist, die größer ist als beispielsweise die kombinierte Länge des ersten Fassadenelements 100 und des benachbart hierzu angeordneten Fensterelements.

Der genauere Aufbau des ersten Fassadenelements 100 ergibt sich im Einzelnen anhand der in FIG. 3 dargestellten Schnittansicht.

Im Einzelnen weist das erfindungsgemäße Fassadenelement 100 gemäß dieser Ausführungsform eine Dämmschicht 1 auf, die vorzugsweise aus mineralischem Dämmstoff, insbesondere Steinwolle, besteht. Wenn das Fassadenelement 100 keine erhöhte Feuerfestigkeit aufhalten muss, ist es selbstverständlich auch denkbar, einen anderen Dämmstoff zu wählen, insbesondere ein auf Erdöl basierender Dämmstoff, wie Polyurethanschaum. Selbstverständlich kommen aber auch andere Dämmstoffe in Frage, wie etwa eine Dämmmaterial-Schüttung, Flocken oder Wolle.

Bei der dargestellten Ausführungsform wird die Dämmschicht 1 sandwichartig umgeben von einer ersten und einer zweiten Deckplatte 2, 3. Im Einzelnen sind die jeweiligen Deckplatten 2, 3 auf den beiden gegenüberliegenden Außenseiten der Dämmschicht 1 angeordnet und mit der Dämmschicht 1 stoffschlüssig verbunden. In der Regel kommt hier eine Klebung, insbesondere mit einem ZweiKomponentenkleber, zum Einsatz.

Die beiden Deckplatten 2, 3 bei der in FIG. 3 exemplarisch dargestellten Ausführungsform sind vorzugsweise aus Blech oder einem blechartigen Material gebildet. Als Material für die beiden Deckplatten 2, 3 kommen aber auch andere Ausführungsformen in Frage. Beispielsweise kann mindestens eine der beiden Deckplatten 2, 3 als Gips-Karton-Platte, zementgebundene Platte, Natursteinplatte, Ornamentplatte oder als Metall-Sandwich-Platte ausgeführt sein.

Obwohl in den Zeichnungen nicht dargestellt, können an den Längskanten L des Fassadenelements 100, die an ein benachbartes Fassadenelement 100 angrenzen, Verbindungsmittel in Gestalt einer Art "Nut-/Federanordnung" vorgesehen sehen sein. Mit Hilfe dieser zumindest teilweise komplementär ausgebildeten Verbindungsmittel können zwei aneinander angrenzende Fassadenelemente gleicher oder ähnlicher Bauart miteinander (lösbar) verbunden werden.

In diesem Zusammenhang wird auch auf die Draufsicht der Anordnung in FIG. 2 verwiesen, in welcher u.a. zwei aneinander angrenzende und miteinander verbundene Fassadenelemente gleicher oder ähnlicher Bauart gezeigt sind.

Anstelle einer Nut-/Federanordnung kommen selbstverständlich aber auch andere Ausführungsformen für geeignete Verbindungsmittel in Frage.

Die erfindungsgemäße Lösung zeichnet sich dadurch aus, dass das Fassadenelement 100 ferner mindestens eine einstückig, insbesondere monolithisch ausgebildete Außen-Deckplatte 4 aus Glas oder einem glasartigen Material aufweist.

Bei der beispielsweise in FIG. 3 in einer Schnittansicht dargestellten exemplarischen Ausführungsform kommt nur eine einzige Außen-Deckplatte 4 zum Einsatz, die vollflächig auf der Außenfläche der ersten Deckplatte 2 angeordnet und mit der entsprechenden Deckplatte 2 punktweise verbunden ist.

Hierfür kommen entsprechende linienförmige Verklebungen 9 zum Einsatz, d. h. Klebestreifen, über welche die Außen-Deckplatte 4 mit der Außenfläche der ersten Deckplatte 2 verbunden wird.

Alternativ hierzu ist es aber auch denkbar, wenn entsprechende Halteplatten, insbesondere Metallplättchen mit einer Materialstärke von 6 mm und einer Grundfläche von 30 x 30 mm² zum Verbinden der Außen-Deckplatte 4 mit der Deckplatte 2 zum Einsatz kommen.

Auf diese Weise wird zwischen der Innenfläche der Außen-Deckplatte 4 und der Außenfläche der ersten Deckplatte 2 ein Luftspalt bereitgestellt, der zum Hinterlüften der Sandwichstruktur des Fassadenelements 100 dient.

Nachfolgend wird unter Bezugnahme auf die Darstellung in FIG. 3 der Aufbau des Übergangsbereiches zwischen dem Fassadenelement 100 und dem Fensterelement näher beschrieben.

Wie dargestellt, weist ist das Fassadenelement 100 in Gestalt eines sandwichartig aufgebauten Dämmpaneels ausgeführt, welches eine Dämmschicht 1 mit einer nach außen zeigenden ersten Deckfläche 2, einer nach innen zeigenden zweiten Deckfläche 3 sowie einer die beiden Deckflächen 2, 3 verbindenden umlaufenden Fläche aufweist. Ferner ist dem Fassadenelement 100 eine einstückig, insbesondere monolithisch ausgebildete Außen-Deckplatte 4 aus Glas oder einem glasartigen Material zugeordnet. Die Außen-Deckplatte 4 ist derart dimensioniert und auf der ersten Deckfläche der Dämmschicht 1 angeordnet, dass die erste Deckfläche 2 von der Außen-Deckplatte 4 vollständig überdeckt wird.

Andererseits ist zwischen der Außen-Deckplatte 4 und der ersten Deckfläche 2 der Dämmschicht 1 ein Luftspalt vorgesehen. Dieser Luftspalt wird bei der exemplarischen Ausführungsform insbesondere dadurch realisiert, indem die Außen-Deckplatte 4 punkt- oder linienförmig mit der ersten Deckfläche 2 der Dämmschicht 1 verbunden ist.

Darüber hinaus kann der Darstellung in FIG. 3 gut entnommen werden, dass das Dämmpaneel ferner einen zumindest bereichsweise in seinem umlaufenden Randbereich ausgebildeten und von außen nicht einsehbaren Bereich 10 aufweist zum verdeckten Aufnehmen von Konstruktionselementen.

Im Einzelnen ist der von außen nicht einsehbare Bereich derart dimensioniert und ausgebildet, dass in den nicht einsehbaren Bereich 10 eine Rahmenkonstruktion 50, insbesondere eine Rahmenkonstruktion 50 des benachbart zum Fassadenelement 100 angeordneten Fensterelements verdeckt aufnehmbar ist. Gleichwohl mag der von außen nicht einsehbare Bereich 10 derart dimensioniert und ausgebildet sein, dass in den nicht einsehbaren Bereich 10 ein Tragprofil verdeckt aufnehmbar ist.

Wie in FIG. 2 angedeutet, ist benachbart zu dem Fassadenelement 100 ein Fensterelement angeordnet, welches eine Rahmenkonstruktion 50 und eine relativ zu der Rahmenkonstruktion 50 bewegbare Flügelkonstruktion 60 aufweist. Die Rahmenkonstruktion 50 des Fensterelements ist - zumindest größtenteils - in dem von außen nicht einsehbaren Bereich des Fassadenelements 100 aufgenommen.

Bei der in FIG. 3 dargestellten Ausführungsform weist die relativ zu der Rahmenkonstruktion 50 bewegbare Flügelkonstruktion 60 insbesondere einen Fensterflügel auf, der zum Öffnen relativ zu der Rahmenkonstruktion 50 mechanisch linear verschoben verdreht und/oder geschwenkt wird.

Die Erfindung ist nicht auf die in den Zeichnungen exemplarisch dargestellten Ausführungsformen beschränkt, sondern ergibt sich aus einer Zusammenschau sämtlicher hier offenbarter Merkmale.

Insbesondere ist es denkbar, dass die Außen-Deckplatte 4 zumindest in dem von außen nicht einsehbaren Bereich 10 beschichtet, insbesondere bedruckt ist. Diese Beschichtung ist vorzugsweise auf der Innenfläche der Außen-Deckplatte 4 im Bereich des nicht einsehbaren Bereiches 10 aufgebracht.

Ferner ist es denkbar, wenn in dem Luftspalt bzw. Spalt zwischen der Außen-Deckplatte 4 und der ersten Deckfläche der Dämmschicht 1 zumindest bereichsweise energieabsorbierende Elemente oder Strukturen, insbesondere Solarkollektoren oder dergleichen vorgesehen sind.

## Patentansprüche

1. Anordnung mit mindestens einem Dach- oder Fassadenelement (100) in Gestalt eines sandwichartig aufgebauten Dämmpaneels, welches Folgendes aufweist:
- eine Dämmschicht (1), insbesondere aus mineralischem oder erdölbasiertem Dämmstoff, wobei die Dämmschicht (1) eine nach außen zeigende erste Deckfläche, eine nach innen zeigende zweite Deckfläche sowie eine die beiden Deckflächen verbindende umlaufende Fläche aufweist; und
- eine einstückig, insbesondere monolithisch ausgebildete Außen-Deckplatte (4) aus Glas, einem glasartigen Material, oder einem anderen anorganischen Material,
wobei die Außen-Deckplatte (4) derart dimensioniert und auf der ersten Deckfläche angeordnet ist, dass die erste Deckfläche der Dämmschicht (1) von der Außen-Deckplatte (4) vollständig überdeckt wird;
wobei das Dach- oder Fassadenelement (100) ferner einen zumindest bereichsweise in seinem umlaufenden Randbereich ausgebildeten und von außen nicht einsehbaren Bereich (10) aufweist zum verdeckten Aufnehmen von Konstruktionselementen;
**dadurch gekennzeichnet, dass** die Anordnung ferner ein zu dem mindestens einen Dach- oder Fassadenelement (100) benachbart angeordnetes Fensterelement aufweist, wobei das Fensterelement eine Rahmenkonstruktion (50) und eine relativ zu der Rahmenkonstruktion (50) bewegbare Flügelkonstruktion (60) aufweist, wobei die Rahmenkonstruktion (50) in dem von außen nicht einsehbaren Bereich (10) des Dach-oder Fassadenelements (100) aufgenommen ist, und
wobei der von außen nicht einsehbare Bereich (10) des Dach- oder Fassadenelements (100) derart dimensioniert und ausgebildet ist, dass in den nicht einsehbaren Bereich (10) die Rahmenkonstruktion (50) des benachbart zum Dach- oder Fassadenelement (100) angeordneten Fensterelements verdeckt aufgenommen ist.

2. Anordnung nach Anspruch 1,
wobei der von außen nicht einsehbare Bereich (10) in mindestens zwei einander gegenüberliegenden Seiten des Dämmpaneels ausgebildet ist.

3. Anordnung nach Anspruch 1 oder 2,
wobei der von außen nicht einsehbare Bereich (10) als ein das Dämmpaneel umlaufender Bereich ausgebildet ist.

4. Anordnung nach einem der Ansprüche 1 bis 3,
wobei der von außen nicht einsehbare Bereich (10) derart dimensioniert und ausgebildet ist, dass in den nicht einsehbaren Bereich (10) ein Tragprofil verdeckt aufnehmbar ist.

5. Anorndung nach einem der Ansprüche 1 bis 4,
wobei der nach außen nicht einsehbare Bereich (10) eine von dem Randbereich des Dämmpaneels einspringende Tiefe aufweist, die mindestens 5 cm und vorzugsweise mindestens 10 cm beträgt.

6. Anordnung nach einem der Ansprüche 1 bis 5,
wobei der nach außen nicht einsehbare Bereich (10) eine von dem Randbereich des Dämmpaneels einspringende Tiefe aufweist, welche gleich wie oder größer als die Stärke bzw. Dicke der Dämmschicht (1) ist.

7. Anordnung nach einem der Ansprüche 1 bis 6,
wobei zwischen der Außen-Deckplatte (4) und der ersten Deckfläche der Dämmschicht (1) ein Luftspalt vorgesehen ist.

8. Anordnung nach Anspruch 7, wobei in dem Luftspalt zwischen der Außen-Deckplatte (4) und der ersten Deckfläche der Dämmschicht (1) energieabsorbierende Elemente, insbesondere Solarkollektoren, vorgesehen sind.

9. Anordnung nach einem der Ansprüche 1 bis 8, insbesondere nach Anspruch 6, wobei die Außen-Deckplatte (4) punkt-
oder linienförmig mit der ersten Deckfläche der Dämmschicht (1) verbunden ist.

10. Anordnung nach einem der Ansprüche 1 bis 9,
wobei die erste und/oder zweite Deckfläche der Dämmschicht (1) auf einem im Vergleich zu dem Material der Dämmschicht (1) relativ harten Material gebildet sind/ist.

11. Anordnung nach einem der Ansprüche 1 bis 10,
wobei die erste und/oder zweite Deckfläche der Dämmschicht (1) von einem Flächenelement (2, 3), insbesondere metallischen Flächenelement gebildet werden/wird.

12. Anordnung nach einem der Ansprüche 1 bis 11,
wobei die Außen-Deckplatte (4) eine zementgebundene Platte, eine Natursteinplatte, eine Ornamentplatte, oder eine Metall-Sandwich-Platte ist.

13. Anordnung nach einem der Ansprüche 1 bis 12,
wobei die relativ zu der Rahmenkonstruktion (50) bewegbare Flügelkonstruktion (60) insbesondere einen Fensterflügel aufweist, der zum Öffnen relativ zu der Rahmenkonstruktion (50) mechanisch linear verschoben, gedreht und/oder geschwenkt wird.

## Claims

1. An arrangement having at least one roof or façade element (100) in the form of a sandwich insulation panel which comprises the following:
- an insulating layer (1), particularly made of mineral or petroleum-based insulating material, wherein the insulating layer (1) has an outwardly facing first cover surface, an inwardly facing second cover surface as well as a surrounding area connecting the two cover surfaces; and
- a one-piece, particularly monolithically configured outer cover plate (4) made of glass, glass-like material, or other inorganic material,
wherein the outer cover plate (4) is dimensioned and arranged on the first cover surface such that the first cover surface of the insulating layer (1) is completely covered by the outer cover plate (4);
wherein the roof or façade element (100) further comprises a region (10) formed at least partially at its peripheral edge area and not visible from the outside for the concealed accommodating of constructional elements; **characterized in that**
the arrangement further comprises a window element arranged adjacent to the at least one roof or façade element (100), wherein the window element exhibits a frame structure (50) and a wing structure (60) movable relative to the frame structure (50), wherein the frame structure (50) is accommodated in the region (10) of the roof or façade element (100) not visible from the outside, and
wherein the region (10) of the roof or façade element (100) not visible from the outside is dimensioned and configured such that the frame structure (50) of the window element arranged adjacent to the roof or façade element (100) is concealed in the not visible region (10).

2. The arrangement according to claim 1,
wherein the region (10) not visible from the outside is formed in at least two oppositely disposed sides of the insulating panel.

3. The arrangement according to claim 1 or 2,
wherein the region (10) not visible from the outside is designed as an area surrounding the insulating panel.

4. The arrangement according to one of claims 1 to 3,
wherein the region (10) not visible from the outside is dimensioned and configured such that a support profile can be accommodated in concealed manner in the not visible region (10).

5. The arrangement according to one of claims 1 to 4,
wherein the region (10) not visible from the outside has a recessed depth from the edge area of the insulating panel amounting to at least 5 cm and preferably at least 10 cm.

6. The arrangement according to one of claims 1 to 5,
wherein the region (10) not visible from the outside has a recessed depth from the edge area of the insulating panel which is equal to or greater than the size/thickness of the insulating layer (1).

7. The arrangement according to one of claims 1 to 6,
wherein an air gap is provided between the outer cover plate (4) and the first cover surface of the insulating layer (1).

8. The arrangement according to claim 7,
wherein energy-absorbent elements, in particular solar panels, are provided in the air gap between the outer cover plate (4) and the first cover surface of the insulating layer (1).

9. The arrangement according to one of claims 1 to 8, particularly claim 6, wherein the outer cover plate (4) is connected at points or continuously to the first cover surface of the insulating layer (1).

10. The arrangement according to one of claims 1 to 9,
wherein the first and/or second cover surface of the insulating layer (1) is/are formed on a relatively hard material compared to the material of the insulating layer (1).

11. The arrangement according to one of claims 1 to 10,
wherein the first and/or second cover surface of the insulating layer (1) is/are formed by a surface element (2, 3), particularly a metallic surface element.

12. The arrangement according to one of claims 1 to 11,
wherein the outer cover plate (4) is a cementitious plate, a natural stone plate, an ornamental plate or a metal sandwich plate.

13. The arrangement according to one of claims 1 to 12,
wherein the wing structure (60) movable relative to the frame structure (50) in particular comprises a casement which is linearly displaced, rotated and/or pivoted mechanically relative to the frame structure (50) to open.

## Revendications

1. Agencement comprenant au moins un élément de toit ou de façade (100) sous la forme d'un panneau d'isolation conçu en sandwich, comprenant ce qui suit :
- une couche d'isolation (1) en particulier en un matériau isolant minéral ou à base de pétrole, la couche d'isolation (1) comprenant une première surface de couverture dirigée vers l'extérieur, une seconde surface de couverture dirigée vers l'intérieur et une surface périphérique reliant les deux surfaces de couverture ; et
- une plaque de couverture extérieure (4) réalisée d'un seul tenant, en particulier de façon monolithique, en verre, en un matériau similaire au verre ou en un autre matériau inorganique,
la plaque de couverture extérieure (4) étant dimensionnée et agencée sur la première surface de couverture de telle sorte que la première surface de couverture de la couche d'isolation (1) est complètement recouverte par la plaque de couverture extérieure (4) ;
l'élément de toit ou de façade (100) comprenant en outre une zone (10) qui est réalisée au moins localement dans sa zone de bord périphérique et qui n'est pas visible de l'extérieur, destinée à loger de façon cachée des éléments de construction ;
**caractérisé en ce que**
l'agencement comprend en outre un élément de fenêtre agencé au voisinage dudit au moins un élément de toit ou de façade (100), l'élément de fenêtre comprenant une construction de cadre (50) et une construction de vantail (60) mobile par rapport à la construction de cadre (50), la construction de cadre (50) étant logée dans la zone (10) non visible de l'extérieur de l'élément de toit ou de façade (100), et
la zone (10) non visible de l'extérieur de l'élément de toit ou de façade (100) est dimensionnée et réalisée de telle sorte que la construction de cadre (50) de l'élément de fenêtre agencé au voisinage de l'élément de toit ou de façade (100) est logée de façon cachée dans la zone (10) non visible de l'extérieur.

2. Agencement selon la revendication 1,
dans lequel
la zone (10) non visible de l'extérieur est réalisée dans au moins deux faces opposées l'une à l'autre du panneau d'isolation.

3. Agencement selon la revendication 1 ou 2,
dans lequel
la zone (10) non visible de l'extérieur est réalisée sous forme de zone entourant le panneau d'isolation.

4. Agencement selon l'une des revendications 1 à 3,
dans lequel
la zone (10) non visible de l'extérieur est dimensionnée et réalisée de manière à pouvoir loger de façon cachée un profilé porteur dans la zone (10) non visible de l'extérieur.

5. Agencement selon l'une des revendications 1 à 4,
dans lequel
la zone (10) non visible de l'extérieur présente une profondeur en retrait de la zone de bord du panneau d'isolation, qui est d'au moins 5 cm et de préférence d'au moins 10 cm.

6. Agencement selon l'une des revendications 1 à 5,
dans lequel
la zone (10) non visible de l'extérieur présente une profondeur en retrait de la zone de bord du panneau d'isolation, qui est égale ou supérieure à l'épaisseur de la couche d'isolation (1).

7. Agencement selon l'une des revendications 1 à 6,
dans lequel
un intervalle d'air est prévu entre la plaque de couverture extérieure (4) et la première surface de couverture de la couche d'isolation (1).

8. Agencement selon la revendication 7,
dans lequel
des éléments d'absorption d'énergie, en particulier des collecteurs solaires, sont prévus dans l'intervalle d'air entre la plaque de couverture extérieure (4) et la première surface de couverture de la couche d'isolation (1).

9. Agencement selon l'une des revendications 1 à 8, en particulier selon la revendication 6,
dans lequel
la plaque de couverture extérieure (4) est reliée de manière ponctuelle linéaire à la première surface de couverture de la couche d'isolation (1).

10. Agencement selon l'une des revendications 1 à 9,
dans lequel
la première et/ou la seconde surface de couverture de la couche d'isolation (1) est/sont réalisée(s) en un matériau relativement dur par comparaison au matériau de la couche d'isolation (1).

11. Agencement selon l'une des revendications 1 à 10,
dans lequel
la première et/ou la seconde surface de couverture de la couche d'isolation (1) est/sont formée(s) par un élément surfacique (2, 3), en particulier par un élément surfacique métallique.

12. Agencement selon l'une des revendications 1 à 11,
dans lequel
la plaque de couverture extérieure (4) est une plaque liée par ciment, une plaque en pierre naturelle, une plaque ornementale ou une plaque en métal sandwich.

13. Agencement selon l'une des revendications 1 à 12,
dans lequel
la construction de vantail (60) mobile par rapport à la construction de cadre (50) comprend en particulier un vantail de fenêtre qui, en vue de l'ouvrir, est mécaniquement mobile en translation linéaire, en rotation et/ou en pivotement par rapport à la construction de cadre (50).
